# EUROPÄISCHE PATENTSCHRIFT

(11) **EP 0 995 974 B1**
(45) Veröffentlichungstag und Bekanntmachung des Hinweises auf die Patenterteilung: **23.03.2005**
(21) Anmeldenummer: 99121098.0
(22) Anmeldetag: 22.10.1999
(51) Int. Cl.: G01D 5/244, B62D 15/02

(54) **Drehgeber**
Rotation detector
Détecteur de rotation

(30) Priorität: 24.10.1998 DE 19849108
(43) Veröffentlichungstag der Anmeldung: 26.04.2000
(60) Teilanmeldung: 02007631.1
(73) Patentinhaber: Fritz Kübler GmbH Zähl-und Sensortechnik, 78054 Villingen-Schwenningen (DE)
(72) Erfinder: Steiner, Viktor, 78532 Tuttlingen (DE)
(74) Vertreter: Kohl, Karl-Heinz, Dipl.-Ing.

(56) Entgegenhaltungen:
- EP-A- 0 516 572
- US-A- 5 202 203
- US-A- 5 347 213
- US-A- 5 663 616
- PATENT ABSTRACTS OF JAPAN vol. 1998, no. 12, 31. Oktober 1998 (1998-10-31) & JP 10 197289 A (NEC CORP), 31. Juli 1998 (1998-07-31)

## Beschreibung

Die Erfindung betrifft einen Drehgeber nach dem Oberbegriff des Anspruches 1 bzw. 2.

Es sind mechanische Multiturn-Drehgeber bekannt (EP 0 550 794 B1), bei denen mehrere Winkelcodierscheiben über ein Untersetzungsgetriebe miteinander verbunden sind. Es bewirkt, daß die jeweils nachgeschaltete Winkelcodierscheibe bei einer vollständigen Umdrehung der vorgeschalteten Winkelcodierscheibe um eine ihrem Auflösungsvermögen entsprechende Einheit gedreht wird. Bei diesem Drehgeber vervielfacht sich entsprechend der Anzahl der Codierscheiben auch die Anzahl der Abtastsysteme. Für das Untersetzungsgetriebe ist eine hohe Präzision erforderlich. Dieser Drehgeber kann nur aufwendig montiert werden. Das Untersetzungsgetriebe ist nicht verschleißfrei und erlaubt nur begrenzte Drehzahlen.

Es sind auch Multiturn-Drehgeber mit einer elektronischen Zähleinheit bekannt (EP 0 516 572 B1), bei denen anstelle des mechanischen Getriebes eine zusätzliche Codierscheibe eingesetzt wird, die mit der Geberwelle direkt verbunden ist und dazu dient, die Anzahl der Umdrehungen der Geberwelle zu erfassen. Der auf dieser zusätzlichen Codierscheibe befindliche Code wird optisch ausgelesen und in Zählimpulse gewandelt, die an eine Zähleinheit weitergegeben werden. Zur Pufferung der Daten ist ein Akku oder eine Batterie zusammen mit der Zählereinheit im Drehgeber untergebracht. Da die permanente optische Auslesung der Codierscheibe verhältnismäßig viel Strom benötigt, weil die Lichtquelle bei diesem Ausleseverfahren ständig bestromt werden muß, um keine Daten zu verlieren, fallen die Akkus bzw. Batterien relativ groß aus. Darum hat der Drehgeber selbst ebenfalls eine entsprechende Baugröße, wenn ein Akku oder eine Batterie eingesetzt werden soll, die eine brauchbare Daten-Pufferzeit von typischerweise mehreren Jahren voraussetzt. Außerdem wird zur Zählung der Umdrehungen auf flankengetriggerte Impulse zurückgegriffen. Dadurch kann aber nicht zwischen einem Störimpuls und einem Zählimpuls unterschieden werden.

Es sind schließlich Drehgeber bekannt (EP 0 550 794 B1), bei denen statt des Auslesens einer zusätzlichen optischen Codierscheibe bei Drehung der Geberwelle Schalter mechanisch oder magnetisch betätigt werden. Der dabei entstehende Codeverlauf wird in Zählimpulse umgewandelt, die an eine Zähleinheit weitergegeben werden. Auch bei diesem Drehgeber muß die ganze Schaltung für die Umdrehungszählung der Geberwelle permanent bestromt werden. Hierfür ist ein entsprechend großer Akku notwendig. Alternativ kann aber auch die ganze Schaltung insgesamt besonders hochohmig ausgelegt sein. Diese Hochohmigkeit der gesamten Auswerteelektronik, der Sensoren, der Zählimpulsaufbereitung und der Zählereinheit bringt jedoch das Problem mit sich, daß die Auswerteelektronik empfindlich für elektromagnetische Störungen ist. Dies ist insbesondere bei impulsgesteuerten (inkrementalen) Systemen von Bedeutung. Bei ihnen werden in der Regel die Flankenwechsel zweier phasenversetzter Codespuren mittels Differentiator-Schaltung in die eigentlichen Zählimpulse gewandelt. Es handelt sich hierbei um sehr kurze, hochfrequente Zählimpulse, die sich nur schwer aus einem elektromagnetischen Störspektrum (EM-Störspektrum) ausfiltern lassen, weil sie etwa das gleiche Frequenzspektrum wie diese haben. Eine einmal erfaßte falsche Umdrehungszählung wird darum nicht erkannt und auch nicht korrigiert, da ein Unterscheidungsmerkmal zwischen Störsignal und Nutzsignal fehlt. Der Drehgeber gibt zwangsweise einen falschen Positionswert an, was zum Ausfall des Gesamtsystems führt. Teure Maschinenstillstandszeiten oder gar Maschinenschäden sind die Folge. Des weiteren fehlt bei allen bisher bekannten Multiturnsystemen, die auf inkrementaler Basis (mit Zählern) die Umdrehungszahl erfassen, eine Einrichtung, welche bei einem Sensor- oder Zählerdefekt den Fehler erkennen, beheben und/oder melden kann.

Es ist auch ein Luftspulmeßinstrument für die Kraftfahrzeugausrüstung bekannt (US-A-5 347 213), bei dem das Anzeigegerät zwischen zwei Stromniveaus umgeschaltet wird, während die zugehörige Logikschaltung unbeeinflußt bleibt. Zur Kontrolle der Stromaufnahme ist ein zusätzliches externes Steuersignal vorgesehen. Verändert sich die Position des Instrumentenzeigers, wird das Gerät mit der maximalen Stromaufnahme beaufschlagt, um u.a. mechanische Reibungskräfte der Instrumentenlagerung zu überwinden und ein schnelles Einschwingen des Zeigers zu erreichen. Bei statischer Position des Zeigers wird das Anzeigeinstrument mit reduziertem Strom beaufschlagt. Das Logikmodul für die Ansteuerung des Luftspulmeßgerätes wird ebenfalls permanent mit Strom betrieben.

Aus der US-A-5 663 616 ist eine Meßvorrichtung für die Kommutierung von Motorspulen bekannt, die sehr grob auflösend ist. Die Anzahl der Umdrehungen wird inkrementell erfaßt, aber nicht gepuffert. Darum geht der Wert nach Abschalten der Versorgungsspannung verloren.

Bei einem anderen bekannten Drehgeber (JP-A-1 019 7289) tritt ebenfalls das Problem auf, daß bei ausgeschalteter Versorgungsspannung die Position nicht aktualisiert wird.

Die US-A-5 202 203 zeigt eine Lithium-Thyonylchlorid-Batterie.

Der Erfindung liegt die Aufgabe zugrunde, den gattungsgemäßen Drehgeber so auszubilden, daß er bei kostengünstiger Ausbildung eine kompakte Bauform hat und zuverlässig die jeweiligen Positionswerte der Geberwelle erfassen kann.

Diese Aufgabe wird beim gattungsgemäßen Drehgeber erfindungsgemäß mit den kennzeichnenden Merkmalen des Anspruches 1 bzw. 2 gelöst.

Beim erfindungsgemäßen Drehgeber gemäß Anspruch 1 wird das Logikmodul nicht ständig bestromt. Es wird nur dann mit Strom versorgt, wenn ein Pegelwechsel der Signale des Sensors auftritt. Die Überwachungseinrichtung schaltet beim Pegelwechsel der Signale des Sensors über den Schalter das Logikmodul ein bzw. aus. Beim erfindungsgemäßen Drehgeber gemäß Anspruch 2 wird das Logikmodul nur bei einem Taktimpuls des ihm zugeordneten Taktimpulsgebers mit Strom/Spannung versorgt. Der Taktimpulsgeber schaltet über einen Schalter das Logikmodul mit dem Sensor mit jedem Taktimpuls ein bzw. aus. Bei beiden Drehgebern wird das Logikmodul erst beim Schließen des Schalters bestromt. Da das Logikmodul nicht ständig, sondern nur kurzzeitig für die Zeit der Messung bestromt wird, kann die Pufferbatterie oder der Pufferakku sehr kompakt gehalten werden, weil der größte Teil der Auswerteelektronik nur kurzzeitig nach einem der obigen Ereignisse aktiv ist und bestromt wird. Infolge der kurzen Aktivzeiten der Auswertelektronik kann diese niederohmig und damit unempfindlich für elektromagnetische Störungen ausgelegt werden. Die Pufferbatterie bzw. der Pufferakku haben infolge der erfindungsgemäßen Ausbildung des Drehgebers nach Anspruch 1 und 2 eine lange Lebensdauer.

Weitere Merkmale der Erfindung ergeben sich aus den weiteren Ansprüchen, der Beschreibung und den Zeichnungen

Die Erfindung wird anhand zweier in den Zeichnungen dargestellter Ausführungsbeispiele näher erläutert. Es zeigen
- Fig. 1: in schematischer Darstellung einen erfindungsgemäßen Drehgeber im Axialschnitt,
- Fig. 2: einen Schaltplan des Drehgebers gemäß Fig. 1,
- Fig. 3: den Zeitverlauf verschiedener Sensoren des erfindungsgemäßen Drehgebers gemäß Fig. 1,
- Fig. 4: einen Schaltplan einer zweiten Ausführungsform eines erfindungsgemäßen Drehgebers.

Der Drehgeber hat ein Gehäuse 1 mit einem Flansch 2, der Lager 3, 4 für eine Geberwelle 5 aufweist. Sie ragt in das Gehäuse 1 und trägt eine Codescheibe 6, mit der die Drehung der Geberwelle 5 um 360° erfaßt wird. Der Codescheibe 6 ist eine Lichtquelle 7 im Flansch 2 zugeordnet.

Die Geberwelle 5 trägt mit Abstand zur Codescheibe 2 drehfest einen Codeträger 8, dem am Umfang mindestens drei Sensoren 9 bis 11 zugeordnet sind. Sie sind an eine Auswerteelektronik 12 angeschlossen, die auf einer Leiterplatte 13 vorgesehen ist. Sie ist im Gehäuse 1 im Bereich oberhalb des Codeträgers 8 untergebracht. Der Codeträger 8 mit den zugeordneten Sensoren 9 bis 11 dient zur Erfassung mehrerer Umdrehungen der Geberwelle 5.

Der Codescheibe 6 ist eine weitere Auswerteelektronik 14 zugeordnet, die sich auf einer Leiterplatte 15 im Gehäuse 1 befindet. Die Leiterplatte 15 befindet sich im Bereich zwischen der Codescheibe 6 und dem Codeträger 8 und weist eine Durchtrittsöffnung 16 für die Geberwelle 5 auf.

Die Spannungsversorgung der beiden Auswerteelektroniken 12 und 14 erfolgt im Normalbetrieb durch eine externe Spannungsquelle.

Wird die externe Spannungsquelle abgeschaltet, erfolgt die Spannungsversorgung für die Auswerteelektronik 12 durch eine Batterie oder einen Akku 17, die (der) im Flansch 2 gelagert ist.

Die Codescheibe 6 und die zugeordnete Lichtquelle 7 sind in bekannter Weise ausgebildet. Die Codescheibe 6 löst eine 360°-Drehung der Geberwelle 5 in bekannter Weise durch Absolutcodierung in entsprechend viele Positionen auf, so daß die Winkelstellung sofort nach Einschalten des Drehgebers für eine Umdrehung zur Verfügung steht. Die Absolutcodierung kann optisch, magnetisch oder induktiv erfolgen.

Der Codeträger 8 mit den Sensoren 9 bis 11 erfaßt die Anzahl vollständiger Umdrehungen der Geberwelle 5. Zusammen mit der Codescheibe 6 stellt er die Gesamtwinkel- oder Gesamtweg-Information zur Verfügung.

Der Codeträger 8 kann optisch, magnetisch, induktiv oder kapazitiv arbeiten. Er kann als Scheibe, als Ring oder dergleichen ausgebildet sein. Er ist drehfest mit der Geberwelle 5 verbunden und weist mindestens eine Signalquelle oder Code-Spur auf. Die Sensoren 9 bis 11 können optisch, magnetisch, induktiv oder kapazitiv arbeiten und lesen den Code des Codeträgers 8 aus und stellen die gemessenen Werte der nachfolgenden Auswerteelektronik 12 zur Verfügung. Sie setzt die von den Sensoren 9 bis 11 gelieferten Codes in die Anzahl der Umdrehungen der Geberwelle 5 um. Die Auswerteelektronik 12 hat außerdem die Aufgabe, elektromagnetische Störungen zu unterdrücken und eventuell eine Datenkorrektur im Falle einer Störung und Ausgabe einer Warnung oder einer Fehlermeldung vorzunehmen, falls zum Beispiel einer der Sensoren ausfällt. Mit der Batterie 17 werden die Informationen des Codeträgers 8 bzw. der Sensoren 9 bis 11 bzw. der Auswerteelektronik im Falle einer Betriebsspannungsabschaltung gepuffert.

Das Gehäuse 1 ist mit einem Stecker 18 als Schnittstelle versehen, über den der Drehgeber mit einem Rechner verbunden werden kann.

Abweichend vom dargestellten Ausführungsbeispiel können der Codeträger 8 für den sogenannten Multiturn und die Codescheibe 6 für den sogenannten Singleturn auch eine Einheit bilden.

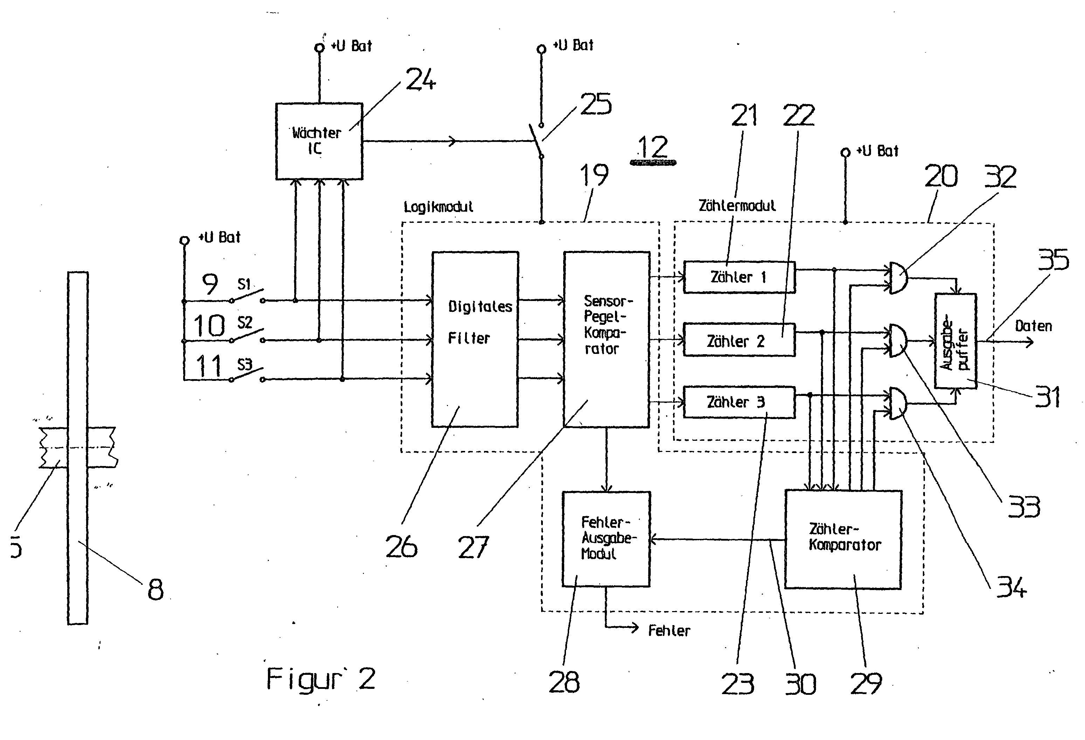

Wie Fig. 2 zeigt, werden die Sensoren 9 bis 11 mit der Batteriespannung U_{Bat} versorgt. Die Auswerteelektronik 12 hat ein Logikmodul 19 und ein Zählermodul 20. Beide Module 19, 20 werden mit der Batteriespannung UBat versorgt. Die Sensoren 9 bis 11 werden ständig bestromt. Das Logikmodul 19 wird nur jeweils bei einem Pegelwechsel der Sensoren 9 bis 11 für kurze Zeit geweckt, bis die entsprechenden Daten verarbeitet sind. Das dem Logikmodul 19 nachgeschaltete Zählermodul 20 kann synchron mit dem Logikmodul 19 geweckt werden. In diesem Fall müssen die Zähler 21 bis 23 des Zählermoduls 20 durch nicht flüchtige Speicher, zum Beispiel EEPROMs, ergänzt werden, die spannungsfrei den letzten Zählerwert beibehalten. Es ist aber auch möglich, die Zähler 21 bis 23 des Zählermoduls 20 ständig zu bestromen. Trotz einer hochohmigen Ausgestaltung der Zähler 21 bis 23 kann eine Fehlzählung durch Sperren der Zählereingänge beim Abschalten des Logikmoduls 19 vermieden werden.

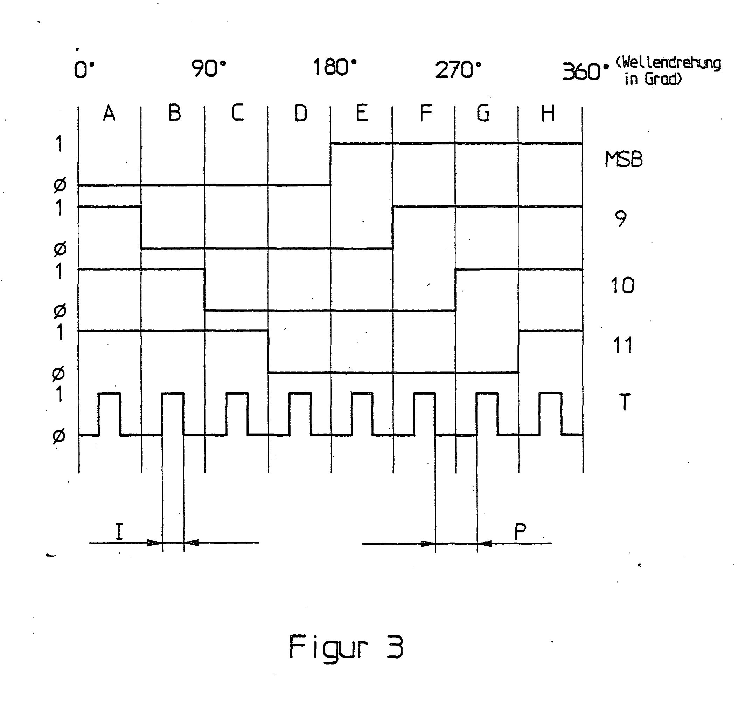

Der Codeträger 8, der beispielsweise aus einer entsprechend magnetisierten Scheibe oder einem Magnetring besteht, moduliert bei Drehung der Geberwelle 5 die drei Sensoren 9 bis 11, die beispielsweise Reedschalter sind. Hierbei entsteht ein Codeverlauf, wie er in Fig. 3 für die drei Sensoren 9 bis 11 bei einer 360°-Drehung der Geberwelle 5 dargestellt ist. Die Spur T in Fig. 3 bleibt in diesem Fall unberücksichtigt. Die drei Sensoren 9 bis 11 schalten zeitlich nacheinander, wie der Codeverlauf in Fig. 3 zeigt. Nach jeweils einer Drehung von 180° schalten die Sensoren 9 bis 11, wobei diese Sensoren Schaltabstände von 45° zueinander haben.

In Fig. 3 ist die höchstwertige Spur MSB (most significant bit) der Codescheibe 6 dargestellt, die einen Pegelwechsel nach jeweils einer 180°-Drehung der Geberwelle 5 vornimmt. Mit dem Ausgangssignal MSB wird die 360°-Drehung der Geberwelle 5 so hoch aufgelöst, daß die Winkelstellung sofort nach Einschalten des Drehgebers für eine Umdrehung zur Verfügung steht. Mit den Ausgangssignalen der Sensoren 9 bis 11 wird die Zahl der 360°-Drehungen der Geberwelle 5 erfaßt.

Bei jedem Flankenwechsel der Signalpegel der Sensoren 9 bis 11 bestromt ein den Sensoren nachgeschaltetes Wächter-IC 24, das ebenfalls mit der Batteriespannung UBat versorgt wird, das nachgeschaltete Logikmodul 19. Zwischen dem Wächter-IC 24 und dem Logikmodul 19 liegt ein Schalter 25, der geöffnet ist, solange das Wächter-IC 24 kein Signal vom jeweiligen Sensor 9 bis 11 erhält. Das Logikmodul 19 bleibt somit ausgeschaltet, bis es durch Schließen des Schalters 25 mittels des Wächter-ICs 24 bestromt wird.

Das Logikmodul 19 weist ein digitales Filter 26 auf (Fig. 2), das eventuelle Störimpulse beispielsweise durch mehrfaches Auslesen der Logikpegel filtert. Ist ein Störimpuls die Ursache für die Aktivierung des Logikmoduls 19 gewesen, ergeht eine Rückmeldung an das Wächter-IC 24. Das Logikmodul 19 wird dann ohne weitere Funktion abgeschaltet.

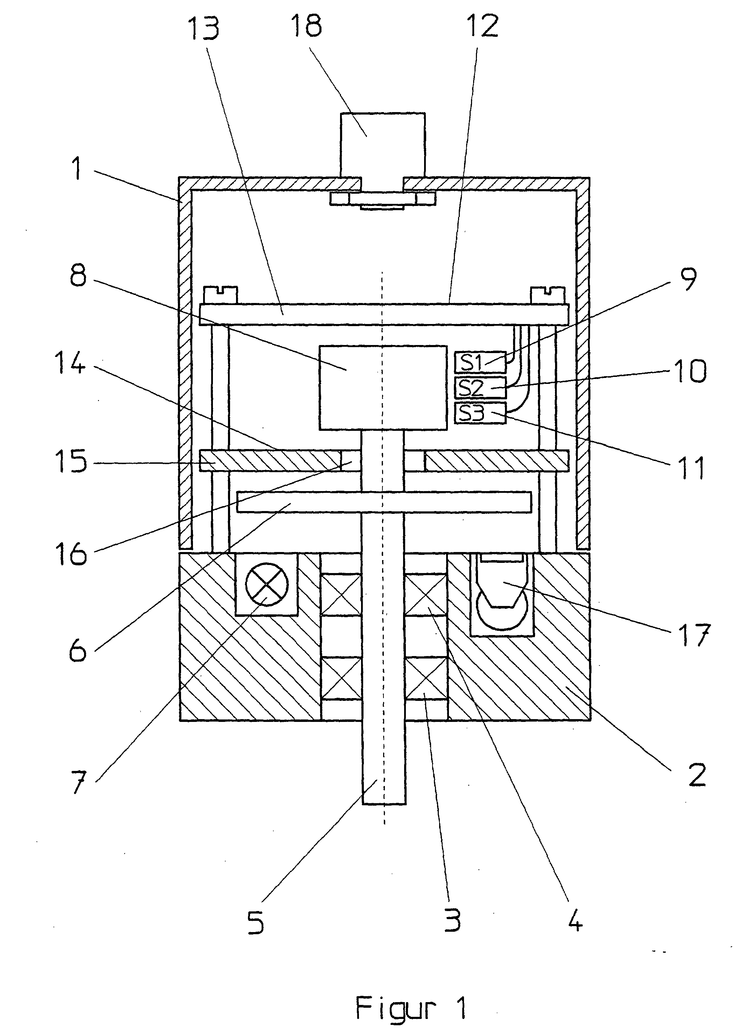

Im Falle eines Nutzsignals als Ursache für die Aktivierung des Logikmoduls 19 werden die Signale der Sensoren 9 bis 11 vom digitalen Filter 26 einem Sensor-Pegelkomparator 27 zugeleitet, der ebenfalls Bestandteil des Logikmoduls 19 ist. Er vergleicht die eingelesenen Pegelzustände 0 bzw. 1 (Fig. 1) der Signale der Sensoren 9 bis 11 mit in einer Tabelle abgelegten Bitkombinationen, die für Segmente A bis H zulässig sind (Fig. 2). Diese Segmente A bis H sind Winkeln von jeweils 45° zugeordnet, so daß einer 360°-Drehung der Geberwelle 5 acht Segmente A bis H zugeordnet sind. Aus dem Vergleich der eingelesenen Pegelzustände der Sensoren 9 bis 11 mit den abgelegten, für die Segmente A bis H zulässigen Bitkombinationen leitet der Sensor-Pegelkomparator 27 weitere Aktionen ab. Dem Sensor-Pegelkomparator 27 sind die Zähler 21 bis 23 des Zählermoduls 20 nachgeschaltet. Je nach Ergebnis des Vergleiches des Sensor-Pegelkomparators 27 kann der Zähler 21 oder 22 oder 23 inkrementiert bzw. dekrementiert werden, oder es kann keine Aktion oder es kann eine Ausgabe einer Warnung und dann Sperren eines der ungültigen Zähler 21 bis 23 oder die Ausgabe eines Fehlers erfolgen. Für den letzten Fall ist dem Sensor-Pegelkomparator 27 ein Fehlerausgabemodul 28 nachgeschaltet, das Teil des Logikmoduls 19 ist und das eine Fehlermeldung ausgibt.

Grundsätzlich würde ein einziger nachgeschalteter Zähler 21 oder 22 oder 23 ausreichen, um die Zählfunktion auszuführen. Um die Sicherheit bei der Erfassung mehrerer Drehungen der Geberwelle 5 zu gewährleisten und weiter zu steigern, sind im dargestellten Ausführungsbeispiel zwei zusätzliche Zähler vorgesehen, so daß in diesem Falle drei Zähler 21 bis 23 vorhanden sind. Ihnen ist ein Zählerkomparator 29 nachgeschaltet, der Teil des Logikmoduls 19 ist, der ständig die Inhalte der drei Zähler 21 bis 23 vergleicht und bei Abweichung den entsprechenden Zähler sperrt, ein entsprechendes Warnsignal 30 an das Fehlerausgabemodul 28 liefert und eine Aktualisierung eines den Zählern 21 bis 23 nachgeschalteten Ausgabepuffers 31 durch den fehlerhaften Zähler blockiert. Er ist Teil des Zählermoduls 20, das ebenso wie das Logikmodul 19 mit Batteriespannung U_{Bat} versorgt wird. Die Zähler 21 bis 23 sind über jeweils ein UND-Glied 32 bis 34 an den Ausgabepuffer 31 angeschlossen, an dessen Ausgang 35 die jeweiligen Meßdaten anliegen. Der Zählerkomparator 29 ist ebenfalls an die UND-Glieder 32 bis 34 angeschlossen. Der Ausgabepuffer 31 erhält somit Daten von den Zählern 21 bis 23 nur, wenn die UND-Bedingung erfüllt ist, d.h. die Zählersignale in Ordnung sind.

Der Einsatz von drei Zählern 21 bis 23 und des Zählerkomparators 29 hat den weiteren Vorteil, daß er für den Fall, daß das digitale Filter 26 nicht greifen sollte und ein Störimpuls auf einer der drei Sensorleitungen zusammen mit den verbleibenden Sensorsignalen eine gültige Bitkombination bildet, zur Änderung eines der drei Zählerinhalte führt. In diesem Falle greift als letzte Sperre der Zählerkomparator 29, der die drei Zählerinhalte in der beschriebenen Weise vergleicht. Der fehlerhafte Zählerstand kann alternativ aber auch korrigiert und der Zählprozeß ohne eine Fehlermeldung fortgesetzt werden.

Bei einer fehlerfreien Funktion erhält jeder Zähler 21 bis 23 das jeweilige Ausgangssignal des zugehörigen Sensors 9 bis 11.

Die Zählfunktion für den Zähler 21 kann zum Beispiel so vorgesehen werden, daß inkrementiert (dekrementiert) wird, wenn ein Pegelwechsel des Signals des Sensors 9 von 0 zu 1 (1 zu 0) stattfindet und gleichzeitig der Pegel des Signals des Sensors 10 "0" ist. Die Synchronisation der Signale des Codeträgers 8 mit den Signalen der Codescheibe 6 beim Übergang der Geberwellenposition von 360° auf 0° geschieht durch einen Pegelvergleich. So wird bei einer Anordnung, welche die Pegellage der Signale MSB und der Signale der Sensoren 9 bis 11 gemäß Fig. 3 erzeugt, der Zählerinhalt des Zählers 21 um 1 dekrementiert, solange die Pegel der Signale MSB und des Sensors 9 "1" sind, da der Zähler vor dem Übergang von 360° auf 0° nach dem beschriebenen Beispiel inkrementiert wird. Für die weiteren Zähler 22, 23 gilt entsprechendes.

Für den Drehgeber kann die Pufferbatterie 17 sehr kompakt gehalten werden, weil der überwiegende Teil der Schaltung, nämlich das Logikmodul 19 und optional das Zählermodul 20, nur kurzzeitig nach einem Sensorereignis aktiv ist und bestromt wird. Das Wächter-IC 24 schließt den Schalter 25 erst dann, wenn ein Flankenwechsel der Signalpegel der Sensoren 9 bis 11 auftritt. Aufgrund der kurzen Aktivzeiten kann die Auswerteelektronik 12 niederohmig und damit unempfindlich für elektromagnetische Störungen ausgelegt werden. Sollte sich dennoch eine sensorseitige elektromagnetische Störung ausbilden, kommt die Schutzschaltung zum Einsatz, die aus dem digitalen Filter 26, dem Sensorpegelkomparator 27 und dem Zählerkomparator 29 besteht. Diese Schutzschaltung kann eine Störung abblocken oder sie erkennen, korrigieren und/oder eine Warnmeldung ausgeben. Der Ausfall eines der Sensoren 9 bis 11 kann durch Vergleich der Zählerstände mittels des Zählerkomparators erkannt und ohne einen Funktionsausfall als Warnung an eine übergeordnete Steuerung gemeldet werden. Sie sorgt dafür, daß zum geeigneten Zeitpunkt eine Wartung ohne Maschinenausfallzeiten erfolgen kann.

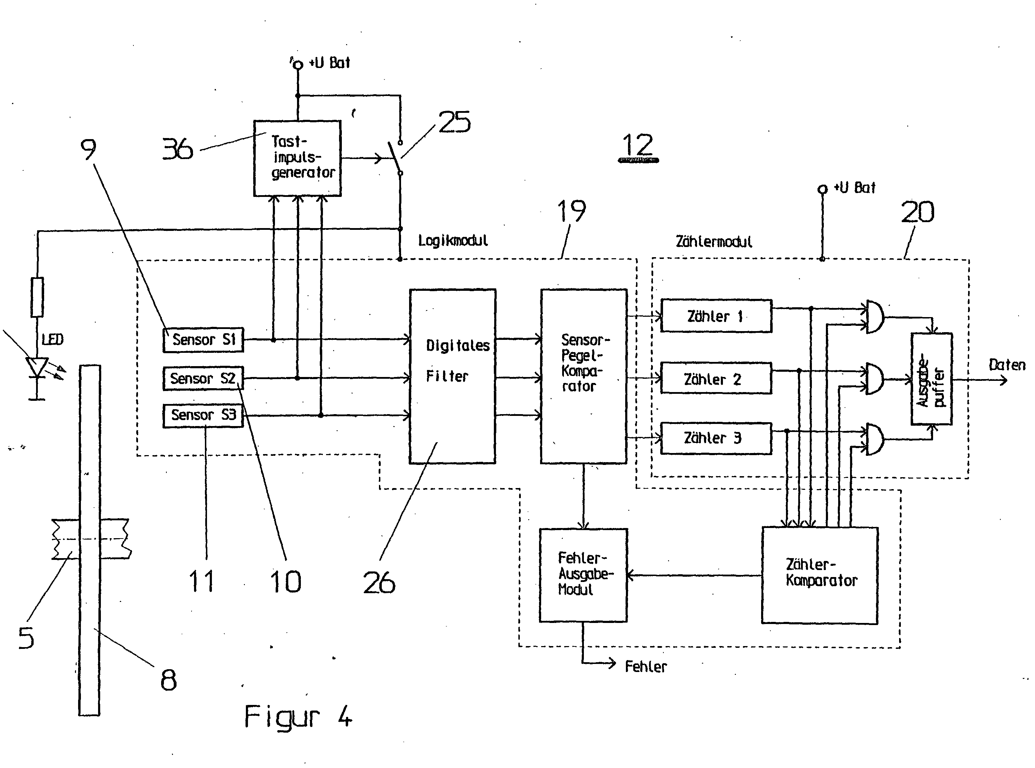

Während bei dem beschriebenen Ausführungsbeispiel lediglich die Sensoren 9 bis 11 ständig bestromt werden müssen, bleibt beim Ausführungsbeispiel nach Fig. 4 die komplette Auswerteschaltung einschließlich der Sensoren 9 bis 11 ausgeschaltet. Anstelle des Wächter-ICs 24 ist ein Tastimpulsgenerator 36 vorgesehen, der Impulse T (Fig. 3) erzeugt. Sie haben eine Taktrate, die so berechnet ist, daß mindestens ein Impuls je Segment A bis H erzeugt wird. Im Rhythmus dieser Taktimpulse T werden die Auswerteschaltung (Sensoren 9 bis 11, Logikmodul 19 und optional Zählermodul 20) aktiviert und bestromt. Während dieser aktiven Phasen findet die Auswertung der Signale statt, wie es anhand des vorigen Ausführungsbeispieles im einzelnen beschrieben worden ist. Um den Stromverbrauch klein zu halten, wird ein entsprechend kleines Impuls-Pausen-Verhältnis I/P (Fig. 3) gewählt. Die Impulsdauer list kürzer als die Dauer P zwischen zwei aufeinanderfolgenden Impulsen T. Der Taktimpulsgenerator 36 schaltet das Logikmodul 19 über den Schalter 25 im Rhythmus der Taktimpulse T. Das Logikmodul 19 und das Zählermodul 20 sind im übrigen gleich ausgebildet wie beim vorigen Ausführungsbeispiel.

Bei der Ausführungsform gemäß Fig. 4 können magnetische, induktive, kapazitive, optische Sensoren oder mechanische Schalter 9 bis 11 zum Einsatz kommen. Bei optischen Sensoren 9 bis 11 muß auch der zugehörige Sender 37, der eine Lichtquelle, zum Beispiel eine LED, sein kann, im Rhythmus der Taktimpulse T ein- und ausgeschaltet werden. Der Sender 37 liegt in diesem Beispiel auf der den optischen Sensoren 9 bis 11 gegenüberliegenden Seite des Codeträgers 8. Mittels des Schalters 25 wird auch der Sender 37 im Zyklus der Taktimpulse ein- und ausgeschaltet.

Die beschriebenen Ausführungsformen des Drehgebers zeichnen sich durch eine kompakte Bauform aus, da die Daten-Pufferbatterie klein gehalten werden kann. Die Gesamtschaltung ist nicht hochohmig ausgelegt, so daß eine elektromagnetische Störanfälligkeit zuverlässig vermieden wird. Mit der Batterie 17 werden die Informationen der dem Codeträger 8 zugeordneten Auswerteelektronik 12 zuverlässig gepuffert, so daß diese Informationen auch im Falle einer Betriebsspannungsabschaltung erhalten bleiben. Des weiteren können durch Redundanz von mindestens drei Sensoren 9 bis 11 bzw. Zählern 21 bis 23 im Multiturn auftretende Fehler wirkungsvoll abgefangen, korrigiert und/oder ohne Maschinenstillstandzeiten als Warnmeldung ausgegeben werden.

## Patentansprüche

1. Drehgeber mit einer Geberwelle, die eine erste Codierscheibe (6) für Singleturn-Messung und eine zweite Codierscheibe (8) für Multiturn-Messung trägt, mit einer der Multiturn-Codierscheibe (8) zugeordneten Auswerteelektronik (12), welche die von mindestens einem Sensor (9 bis 11) ausgelösten Signale einem Logikmodul (19) und einem nachgeschalteten Zählermodul (20) zuführt, das die Signale in Zählimpulse wandelt, und mit wenigstens einem Strom/Spannungspuffer (7),
**dadurch gekennzeichnet, daß** das Logikmodul (19) nur bei einem Pegelwechsel der Signale des Sensors (9 bis 11) kurzzeitig für die Zeit der Messung mit Strom/Spannung versorgt wird, und daß dem Sensor (9 bis 11) eine Überwachungseinrichtung (24) nachgeschaltet ist, die beim Pegelwechsel der Signale des Sensors (9 bis 11) über einen Schalter (25) das Logikmodul (19) ein- bzw. ausschaltet.

2. Drehgeber mit einer Geberwelle, die eine erste Codierscheibe (6) für Singleturn-Messung und eine zweite Codierscheibe (8) für Multiturn-Messung trägt, mit einer der Multiturn-Codierscheibe (8) zugeordneten Auswerteelektronik (12), welche die von mindestens einem Sensor (9 bis 11) ausgelösten Signale einem Logikmodul (19) und einem nachgeschalteten Zählermodul (20) zuführt, das die Signale in Zählimpulse wandelt, und mit wenigstens einem Strom/Spannungspuffer (7),
**dadurch gekennzeichnet, daß** das Logikmodul (19) nur bei einem Taktimpuls eines ihm zugeordneten Taktimpulsgebers (36) kurzzeitig für die Zeit der Messung mit Strom/Spannung versorgt wird, der mit jedem Taktimpuls über einen Schalter (25) das Logikmodul (19) mit dem Sensor (9 bis 11) ein- bzw. ausschaltet.

3. Drehgeber nach Anspruch 1 oder 2,
**dadurch gekennzeichnet, daß** das Logikmodul (19) ein digitales Störimpulsfilter (26) und einen nachgeschalteten Sensor-Pegelkomparator (27) aufweist.

4. Drehgeber nach Anspruch 3,
**dadurch gekennzeichnet, daß** der Sensor-Pegelkomparator (27) die Signalpegel des Sensors (9 bis 11) mit gespeicherten Signalpegeln auf Gültigkeit vergleicht.

5. Drehgeber nach einem der Ansprüche 1 bis 4,
**dadurch gekennzeichnet, daß** das Zählermodul (20) synchron mit dem Logikmodul (19) ein- bzw. ausgeschaltet wird, wobei hierbei während der Ausschaltphase die Zählerstände in nicht flüchtigen Speichern, zum Beispiel EEPROM, zwischengespeichert werden.

6. Drehgeber nach einem der Ansprüche 1 bis 5,
**dadurch gekennzeichnet, daß** das Zählermodul (20) ständig mit Strom versorgt wird.

7. Drehgeber nach einem der Ansprüche 1 bis 6,
**dadurch gekennzeichnet, daß** mehrere Sensoren (9 bis 11) vorgesehen sind, und daß das Zählermodul (20) eine der Zahl der Sensoren (9 bis 11) entsprechende Zahl von Zählern (21 bis 23) aufweist.

8. Drehgeber nach einem der Ansprüche 1 bis 7,
**dadurch gekennzeichnet, daß** dem Zähler (21 bis 23) ein Komparator (29) nachgeschaltet ist, der die Zählerstände der Zähler (21 bis 23) miteinander vergleicht und bei Ungleichheit fehlerhafte Zähler sperrt oder korrigiert und eventuell eine Warnmeldung ausgibt.

9. Drehgeber nach Anspruch 8,
**dadurch gekennzeichnet, daß** dem Komparator (29) ein Fehlerausgabemodul (28) nachgeschaltet ist.

10. Drehgeber nach Anspruch 8 oder 9,
**dadurch gekennzeichnet, daß** dem Zähler (21 bis 23) ein UND-Glied (32 bis 34) nachgeschaltet ist, an das der Komparator (29) angeschlossen ist.

11. Drehgeber nach einem der Ansprüche 1 bis 10,
**dadurch gekennzeichnet, daß** mindestens drei Sensoren (9 bis 11) vorgesehen sind.

12. Drehgeber nach einem der Ansprüche 1 bis 11,
**dadurch gekennzeichnet, daß** zur Energiepufferung ein Akku, ein Kondensator mit entsprechend hoher Kapazität oder eine Batterie Verwendung finden, die durch ihre jeweilige Ausgestaltung einen Temperatureinsatzbereich von mehr als +70°C zulassen, wie zum Beispiel eine Lithium-Thyonylchlorid-Batterie (Li/SOCI 2) mit entsprechender Kapselung.

## Claims

1. Rotation detector with an encoder shaft , which carries a first encoding disc (6) for singleturn-measurement and a second encoding disc (8) for multiturn-measurement with evaluating electronics (12), associated to the multiturn encoding disc (8) and which conveys the signals, triggered by at least one sensor (9 to 11) to a logic module (19) and a downstream switched counter module (20), which converts the signals into counter pulses and with at least one power/voltage buffer (7),
**characterised in that** the logic module (19) is supplied with current/voltage only during alternating levels of the signals of the sensor (9 to 11) in short term for the time of measuring and that switched downstream the sensor (9 to 11) is an invigilator (24) which at the alternation of levels of the signals of the sensor (9 to 11) switches the logic module (19) on or off via a switch (25).

2. Rotation detector with an encoder shaft , which carries a first encoding disc (6) for singleturn-measurement and a second encoding disc (8) for multiturn-measurement with evaluating electronics (12), associated to the multiturn encoding disc (8) and which conveys the signals, triggered by at least one sensor (9 to 11) to a logic module (19) and a downstream switched counter module (20), which converts the signals into counter pulses and with at least one power/voltage buffer (7),
**characterised in that** the logic module (19) is supplied in the short term during the time of measurement with current/voltage only during a clocked pulse of a clocked pulse transmitter (36) assiciated to it which with each clocked pulse switches the logic module (19) on or off with the sensor (9 to 11) via a switch (25).

3. Rotation detector according to claim 1 or 2,
**characterised in that** the logic module (19) comprises a digital disturbing pulse filter (26) and a downstream switched sensor-level-comparator (27).

4. Rotation detector according to claim 3,
**characterised in that** the sensor-level-comparator (27) compares the signal level of the sensor (9 to 11) with memorized signal levels with regard to validity.

5. Rotation detector according to one of the claims 1 to 4,
**characterised in that** the counter module (20) is switched on or off synchronously with the logic module (19), the counter readings hereby being buffered during the off phase within nonvolatile memories for instance EEPROM.

6. Rotation detector according to one of the claims 1 to 5,
**characterised in that** the counter module (20) is permanently supplied with current.

7. Rotation detector according to one of the claims 1 to 6,
**characterised in that** several sensors (9 to 11) are provided and that the counter module (20) comprises a number or counters (21 to 23) corresponding to the number of sensors (9 to 11).

8. Rotation detector according to one of the claims 1 to 7,
**characterised in that** downstream from the counter (21 to 23) a comparator (29) is switched, which compares the counter readings of the counters (21 to 23) with one another and upon disparity blocks or corrects defective counters and can issue an alarm signal.

9. Rotation detector according to claims 8,
**characterised in that** downstream from the comparator (29) an errror output module (28) is switched.

10. Rotation detector according to claims 8 or 9,
**characterised in that** downstream from the counter (21 to 23) an AND element (32 to 34) is switched at which the comparator (29) is connected.

11. Rotation detector according to one of the claims 1 to 10,
**characterised in that** at least three sensors (9 to 11) are provided.

12. Rotation detector according to one of the claims 1 to 11,
**characterised in that** for energy buffering an accumulator, a capacitor with corresponding high capacity or a battery are used, which allow by their respective design a temperature range of application of more than +70°C, like for example a lithium-thyonylchloride-battery (Li/SOCl2) with corresponding casing.

## Revendications

1. Détecteur de rotation avec un arbre capteur lequel porte un premièr disque codeur (6) pour mesurage de singleturn et un second disque codeur (8) pour mesurage de multiturn avec une électronique évaluante (12), correspondant au disque codeur multiturn (8) et amenant les signaux déclenchés par au moins un capteur (9 à 11) à un module logique (19) et un module numérateur (20) placé en aval, lequel transforme les signaux en impulsions de comptage et avec au moins un tampon de courant/tension (7),
**caractérisé en ce que** le module logique (19) est alimenté seulement en cas d'alternance des niveaux du capteur (9 à 11) et temporairement pour le temps de mesurage avec courant/tension et qu'en aval du capteur (9 à 11) est placé un équipement de surveillance (24) lequel en cas de changement des niveaux du capteur (9 à 11) branche respectivement débranche le module logique (19) par un commutateur (25).

2. Détecteur de rotation avec un arbre capteur lequel porte un premièr disque codeur (6) pour mesurage de singleturn et un second disque codeur (8 ) pour mesurage de multiturn avec une électronique évaluante (12), correspondant au disque codeur multiturn (8) et amenant les signaux déclenchés par au moins un capteur (9 à 11) à un module logique (19) et un module numérateur (20) placé en aval, lequel transforme les signaux en impulsions de comptage et avec au moins un tampon de courant/tension (7),
**caractérisé en ce que** le module logique (19) est alimenté seulement en cas d'impulsion de synchronisation d'un générateur d'impulsions de cadence (36) correspondant et temporairement por le temps de mesurage avec courant/tension lequel avec chaque impulsion de synchronisation branche respectivement débranche le module logique (19) avec le capteur (9 à 11) par un commutateur (25).

3. Détecteur de rotation selon revendication 1 ou 2,
**caractérisé en ce que** le module logique (19) comprend un filtre d'impulsion parasite digital (26) et un comparateur des niveaux du capteur (27) placé en aval.

4. Détecteur de rotation selon revendication 3,
**caractérisé en ce que** le comparateur des niveaux des capteurs (27) compare la justesse des niveaux des signaux du capteur (9 à 11) en relation avec les niveaux des signaux enregistrés.

5. Détecteur de rotation selon une des revendications 1 à 4,
**caractérisé en ce que** le module numérateur (20) est branché respectivement débranché synchroniquement avec le module logique (19), et de plus à cette occasion pendant la phase de disjonction les positions du compteur sont enregistrées intermédiairement en mémoires non volatiles, par exemple EEPROM.

6. Détecteur de rotation selon une des revendications 1 à 5,
**caractérisé en ce que** le module numérateur (20) est alimenté en permanence en courant.

7. Détecteur de rotation selon une des revendications 1 à 6,
**caractérisé en ce que** plusieurs capteurs (9 à 11) sont prévus et que le module numérateur (20) comprend un nombre compteurs (21 à 23) de correspondant au nombre de capteurs (9 à 11).

8. Détecteur de rotation selon une des revendications 1 à 7,
**caractérisé en ce que** qu'en aval de compteur (21 à 23) est placé un comparateur (29), lequel compare les positions des compteurs (21 à 23) l'un par rapport à l'autre et en cas de disparité bloque ou corrige des numérateurs défectueux et donne éventuellement un signal d'avertissement.

9. Détecteur de rotation selon revendication 8,
**caractérisé en ce que** au comparateur (29) est placé en aval un module de l'output des défauts (28).

10. Détecteur de rotation selon revendication 8 ou 9,
**caractérisé en ce qu'**en aval du numérateur (21 à 23) est placé un opérateur ET (32 à 34) auquel est connecté le comparateur (29).

11. Détecteur de rotation selon une des revendications 1 à 10,
**caractérisé en ce que** au moins trois capteurs (9 à 11) sont prévus.

12. Détecteur de rotation selon une des revendications 1 à 11,
**caractérisé en ce que** pour la bufférisation d'énergie un accumulateur, un condensateur à capacité comparativement haute ou une pile sont utilisés, lesquels par leur configuration respective permettent un secteur de fonctionnement de température de plus de +70°C, comme par exemple une pile lithium-thyonylechlorure (Li/SOCl2) avec blindage correspondant.
